(19) Europäisches Patentamt
European Patent Office
Office européen des brevets

(11) Veröffentlichungsnummer: **0 075 905**
**B1**

(12) # EUROPÄISCHE PATENTSCHRIFT

(45) Veröffentlichungstag der Patentschrift: **15.01.86**

(51) Int. Cl.⁴: **C 09 B 62/517,** D 06 P 3/66, D 06 P 3/10

(21) Anmeldenummer: **82108890.3**

(22) Anmeldetag: 25.09.82

(54) **Wasserlösliche faserreaktive Phthalocyaninverbindungen, Verfahren zu ihrer Herstellung und ihre Verwendung als Farbstoffe.**

(30) Priorität: **30.09.81 DE 3138864**

(43) Veröffentlichungstag der Anmeldung: **06.04.83 Patentblatt 83/14**

(45) Bekanntmachung des Hinweises auf die Patenterteilung: **15.01.86 Patentblatt 86/3**

(84) Benannte Vertragsstaaten: **CH DE FR GB IT LI**

(56) Entgegenhaltungen:
**GB-A-1 118 012**
**US-A-3 062 830**

**CHEMICAL ABSTRACTS, Band 88, Nr. 7, 3. April 1978, Seite 72, Nr. 91051y, Columbus, Ohio, USA**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Mischke, Peter, Dr., Eichhornweg 2, D-6232 Bad Soden am Taunus (DE)**
Erfinder: **Fuchs, Hermann, Dr., Altenhainer Strasse 2, D-6240 Königstein/Taunus (DE)**

**EP 0 075 905 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft neue, wertwolle, faserreaktive Phtalocyaninverbindungen der allgemeinen Formel (1)

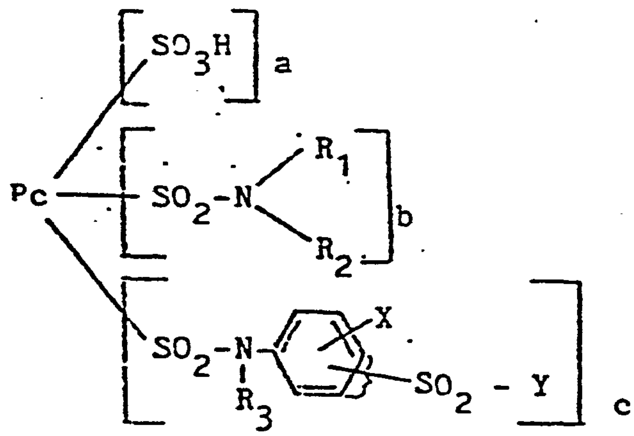

(1)

in welcher Pc den Rest des metallfreien oder metallhaltigen Phthalocyanins, beispielsweise des Kupfer-, Kobalt- oder Nickelphthalocyanins bedeutet, wobei die Sulfonsäure- bzw. Sulfonamidgruppen in den 3-Stellungen der aromatischen Ringe des Phthalocyanins gebunden sind, $R_1$ und $R_2$ jeweils ein Wasserstoffatom oder eine Alkylgruppe von 1 - 6 Kohlenstoffatomen, die durch Methoxy-, Äthoxy-, Propoxy-, $C_2H_5$-0-$C_2H_4$-0-, Cyano-, Acetylamino-, Carboxy-, $HO_3S$-, $H_2O_3P$-, Phenyl-, Methylphenyl-, Methoxyphenyl-, Dimethylamino-, Diäthylamino-, β-Hydroxyäthylamino-, β-Hydroxyäthoxy-, N-Phenylureido-, N-Alkyl

$\overline{C_1-C_4}$

ureido- oder N-Cycloalkylureidogruppen substituiert sein kann, oder eine Allyl-, 2-Methallyl-, Crotyl- oder Cycloalkylgruppe bedeuten, und $R_1$ und $R_2$ zusammen mit dem Stickstoffatom den Rest eines heterocyclischen gesättigten oder ungesättigten Rings, beispielsweise einen Morpholin-, Pyrrolidin-, Piperidin- oder N-Methyl-piperazin-Rest darstellen können, oder R und $R_2$ einen gegebenenfalls substituierten Arylrest, beispielsweise einen Phenylrest, der durch Methyl-, Äthyl-, Methoxy-, Äthoxy-, Carboxy- oder Sulfonsäuregruppen substituiert sein kann, darstellen, wobei $R_1$ und $R_2$ jeweils gleich oder verschieden sein können, $R_3$ ein Wasserstoffatom oder eine Alkylgruppe von 1 bis 4 Kohlenstoffatomen, welche durch Hydroxy- oder Carboxygruppen substituiert sein kann, bedeutet, X ein Wasserstoffatom oder eine Alkyl- oder Alkoxygruppe von 1 bis 4 Kohlenstoffatomen darstellt, Y die Vinylgruppe oder die Gruppierung der Formel -$CH_2$-$CH_2$-Z darstellt, in welcher Z einen anorganischen oder organischen, alkalisch eliminierbaren Rest bedeutet, a eine Zahl zwischen 0 und 2, b eine Zahl zwischen 0 und 2 und c eine Zahl zwischen 1,7 und 2,6 darstellen, mit der Maßgabe, daß die Summe aus a, b und c höchstens 4 ist, ferner ein Verfahren zu ihrer Herstellung, indem man ein Phthalocyaninsulfochlorid der allgemeinen Formel (2)

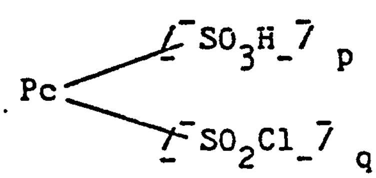

(2)

in welcher Pc die weiter oben genannte Bedeutung hat, p eine Zahl von 0 bis 1 und q eine Zahl von 2 bis 4 bedeuten mit der Maßgabe, daß die Summe aus p und 9 höchstens 4 ist, in wäßrigem Medium mit einem Amin der Formel (3)

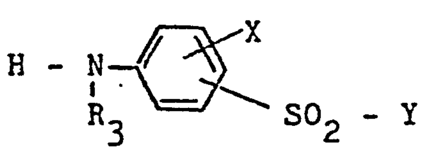

(3)

in welcher $R_3$, X und Y die weiter oben genannten Bedeutungen haben, in Form einer konzentrierten wäßrigen Lösung bzw. Suspension von 1,5 bis 3 Mol pro Liter Wasser bei einem pH-Wert von etwa 3 bis etwa 8 und bei einer Temperatur von 0° bis etwa 100°C, vorzugsweise von 0° bis etwa 40°C, in Gegenwart eines säurebindenden Mittels und in Gegenwart eines Reaktionsbeschleunigers, wie beispielsweise Pyridin, einer Pyridincarbonsäure oder einer Pyridinsulfonsäure, umsetzt und gegebenenfalls mit einem weiteren Amin der allgemeinen Formel (4)

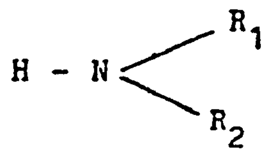

(4)

in welcher $R_1$ und $R_2$ die weiter oben genannten Bedeutungen haben, bei einem pH-Wert von etwa 3 bis 7 und bei einer Temperatur von 0°C bis etwa 30°C in Gegenwart eines säurebindenden Mittels umsetzt oder indem man das Phthalo-Amine der Formeln (3) und (4) bei einem pH-Wert von etwa 3 bis 7 und bei einer Temperatur von 0° bis etwa 30°C in Gegenwart eines säurebindenden Mittels und eines Reaktionsbeschleunigers (wie vorstehend genannt) umsetzt, und gegebenenfalls, wenn Y im eingesetzten Amin der Formel (3) die β-Hydroxyäthylgruppe darstellt, man die erhaltenen Phthalocyaninverbindungen der allgemeinen Formel (1) durch Behandlung mit einem Sulfatierungsmittel in die entsprechenden Phthalocyaninverbindungen, in welcher Y die ß-Sulfatoäthylgruppe bedeutet, überführt, sowie deren Fasermaterialien aus linearen Polyamiden, insbesondere aus hydroxylgruppenhaltigen Fasern, wie nativer oder regenerierter Cellulose, oder zum Färben von Leder.

Aus den deutschen Patentschriften 1 179 317 und 1 283 997, der DE-OS 1 795 140 und der US-Patentschrift 3 062 830 sind bereits Farbstoffe ähnlicher Struktur mit faserreakstoffe eignen sich zum Färben und Bedrucken von Cellulosefasermaterialien.

Gegenüber diesem Stand der Technik wurde nun eine kleinere Gruppe von reaktiven Phthalocyaninfarbstoffen gefunden (vgl. die vorstehende Formel (1)), die sich durch ein überraschend gutes Diffusions- und Reaktionsvermögen auszeichnen und dadurch sehr wertvolle anwendungstechnische Eigenschaften aufweisen, wodurch sie den in den Beispielen der zitierten Patentschriften offenbarten Farbstoffen wesentlich überlegen sind.

In den hinsichtlich der beanspruchten Farbstoffe sehr breit gehaltenen, vorstehend zitierten Patentschriften findet sich kein Hinweis darauf, daß Farbstoffe aus dem dort beanspruchten Kreis, die eine größere Zahl von Reaktivgruppen aufweisen, ein besonders gutes Diffusionsvermögen besitzen und sich deshalb durch sehr wertvolle coloristische Eigenschaften auszeichnen. Aus den Beispielen der vorstehend genannten Patentschriften folgt, daß nach der dort angewandten Arbeitsmethode der Kondensation von Phthalogecyaninsulfochloriden mit reaktivgruppenhaltigen Aminen Farbstofff erhalten werden, die im Mittel höchstens 1,5 Reaktivgruppen pro Farbstoffmolekül enthalten.

Demgegenüber weisen die neuen Farbstoffe der eingangs genannten allgemeinen Formel (1) im Mittel mindestens 1,7 Reaktivgruppen pro Farbstoffmolekül auf. Die besonderen färberischen Eigenschaften der erfindungsgemäßen Farbstoffe sind jedoch nicht nur auf die erhöhte Zahl von im Farbstoffmolekül enthaltenen Reaktivgruppen, sondern auch auf die Struktur der einkondensierten aromatischen Amine der weiter oben genannten allgemeinen Formel (3) zurückzuführen. Im Gegensatz dazu werden bei der Umsetzung von Phthalocyaninsulfochloriden mit reaktivgruppenhaltigen aliphatischen oder araliphatischen Aminen Farbstoffe erhalten, die sich hinsichtlich ihrer anwendungstechnischen Eigenschaften beim Färben von Cellulosefasermaterial von den zum Stand der Technik zählenden Farbstoffen nicht vorteilhaft abheben. Die coloristischen Eigenschaften der erfindungsgemäßen Farbstoffe können durch Einkondensation von primären oder sekundären Aminen zusätzlich günstig beeinflußt werden.

Die erfindungsgemäßen Farbstoffe zeichnen sich gegenüber den in den zitierten Literaturstellen offenbarten Farbstoffen aufgrund ihres überraschend hohen Diffusionsvermögens und ihrer erhöhten Reaktivität dadurch aus, daß sie bereits nach relativ kurzer Verweilzeit im Klotz-Kurzverweil-Verfahren die volle Farbstärke auf dem Fasermaterial erreichen, d.h. mit den erfindungsgemäßen Farbstoffen lassen sich die Färbeprozesse in vergleichweise wesentlich kürzerer Zeit durchführen. Aufgrund der genannten überraschenden Eigenschaften zeigen die erfindungsgemäßen Farbstoffe sowohl im Druck als auch insbesondere beim Färben einen besseren Aufbau als die aus den zitierten Literaturstellen bekannten Farbstoffe nächst vergleichbarer Struktur auf, d.h. zur Erzielung gleicher Färbung muss weniger Farbstoff eingesetzt werden, wodurch weniger Farbstoff in die Abwässer gelangt (vorteilhafteres ökologisches Verhalten).

In der Gruppierung $-CH_2-CH_2-Z$ für Y in der vorstehend genannten allgemeinen Formel (1) bedeutet Z beispielsweise die Gruppe $-OSO_3H$, $-SSO_3H$, $-OPO_3H_2$, -Cl- oder -OH.

Von den erfindungsgemäßen Farbstoffen der eingangs genannten allgemeinen Formel (1) sind diejenigen als besonders wertvoll hervorzuheben, bei denen für $R_3$ und X jeweils ein Wasserstoffatom und für Y die Gruppierung $-CH_2-CH_2-OSO_3H$, $-CH_2-CH_2-SSO_3H$ oder $-CH_2-CH_2-Cl$ steht.

Die Farbstoffe der allgemeinen Formel (1) fallen bei der Synthese gewöhnlich in Form von Gemischen der Einzelfarbstoffe an, die sich voneinander durch den Substitutionsgrad a, b und c unterscheiden, weshalb bei der Aufstellung der die erfindungsgemäßen Farbstoffe abdeckenden Formeln gebrochene Werte der Indices a, b und

c angegeben werden. Diese gebrochenen Zahlen stellen Durchschnittswerte dar, die experimentell und analytisch ermittelt werden.

Zur Herstellung der erfindungsgemäßen Farbstoffe verfährt man im einzelnen so, daß man die Kondensationsreaktionen in relativ konzentrierten Lösungen bzw. Suspensionen durchführt. Man verfährt hierbei so, daß man die aromatischen Amine der allgemeinen Formel (3) in einer Menge von 1,5 bis 3 Mol pro Liter Wasser löst bzw. anlöst und in diesen konzentrierten Lösungen die Kondensationsreaktionen mit den metallfreien oder vorzugsweise metallhaltigen Phthalocyaninsulfochloriden der allgemeinen Formel (2) vornimmt, wobei die mögliche Kondensation mit den Aminen der allgemeinen Formel (4) gleichzeitig oder im Anschluß an die erste Kondensationsreaktion erfolgen kann. Es empfiehlt sich in manchen Fällen, nach etwa 2 bis 4 Stunden Reaktionsdauer die Reaktionsgemische mit der halben bis ganzen Menge der ursprünglich eingesetzten Wassermenge zu verdünnen, um eine gute Rührfähigkeit der Farbstofflösungen zu gewährleisten.

Die aromatischen Amine der genannten allgemeinen Formel (3) werden gegenüber dem Phthalocyaninsulfochlorid der genannten allgemeinen Formel (2) in einem molaren Überschuß von 20 - 70 % über die durch den jeweiligen Zahlenwert des Index c (vergl. Formel 1) vorgegebene molare Menge hinaus eingesetzt.

Die so hergestellten Farbstoffe zeichnen sich überraschenderweise durch hervorragende anwendungstechnische Eigenschaften aus, durch welche sie den bekannten Farbstoffen, (etwa 0,2 Mol bis 1 Mol aromatisches Amin pro Liter Wasser) wesentlich überlegen sind.

Als Ausgangsverbindungen der Formel (2) finden beispielsweise Sulfonsäurechloride oder sulfogruppenhaltige Sulfonsäurechloride des metallfreien Phthalocyanins Verwendung, vorzugsweise jedoch solche von metallhaltigen Phthalocyaninen, wie beispielsweise Kupferphthalocyanin-(3)-disulfochlorid, Kupferphthalocyanin-(3)-trisulfochlorid, Kupfer- oder Nickelphthalocyanin-(3)-tetrasulfochlorid, Kobaltphthalocyanin-(3)-trisulfochlorid oder Kupfer-phthalocyanin-(3)-trisulfochlorid-monosulfonsäure.

Die Sulfonsäurechloride der Formel (2) werden nach bekannten Verfahren hergestellt /Deutsche Patentschrift 891 121/.

Aromatische Amine der allgemeinen Formel (3) sind beispielsweise folgende: 3-β-Sulfatoäthylsulfonyl-anilin, 3-β-Thiosulfatoäthyl-sulfonyl-anilin, 3-β-Phosphatoäthylsulfonyl-anilin, 2,Methoxy-5-β-sulfatoäthylsulfonyl-anilin, 4-β-Sulfato-äthylsulfonyl-anilin, 4-β-Chloräthylsulfonyl-anilin, 4-β-Phosphatoäthylsulfonyl-anilin, 4-β-Thiosulfatoäthylsulfonyl-anilin, 4-Methoxy-5-β-sulfatoäthylsulfonyl-ani-lin, 2-Methoxy-4-β-sulfstoäthylsulfonyl-anilin oder deren ß-Hydroxyäthylsulfonyl-Abkömmlinge.

Amine der Formel (4) sind beispielsweise Ammoniak, Methylamin, Äthylamin, n- und i-Propylamin, n-, iso-, sec. und tert.-Butylamin, Athanolamin, Aminopropanol, N-Methyläthanolamin, Dimethylamin, Diäthylamin, Di-iso-propylamin, Diäthanolamin, Methoxyäthylamin, Hydroxyäthoxyäthylamin, 3-Methoxy-, 3-Äthoxy-, 3-iso-Propoxy-, 3-Cyan-, 3-Acetamino-propylamin, Allylamin, 1- und 2-Methallylamin. Crotylamin, n- und iso-Amylamin, Aminopropionsäure, Aminocapronsäure, Taurin, 2-Amino-äthanphosphonsäure, Cyclohexylamin, Benzylamin, Phenyläthylamin, Anilin, Methyl- und Methoxyaniline, N,N-Dimethyl- und N,N-Diäthylpropylendiamin-(1,3), N-Hydroxyäthyl-äthylendiamin, Di-n- und Di-iso-Butylamin, Morpholin, Pyrrolidin, Piperidin, N-Methyl-piperazin, N-Methylund N-Äthylcyclohexylamin, N-Methyl-, N-Äthyl- und N-β-Hydroxyäthylanilin, 4-Aminobenzolcarbonsäure und 3-Amino-benzolsulfonsäure, 3-(N'-Phenylureido)-propylamin, 2-(N'-Isopropylureido)-äthylamin.

Säurebindende Mittel, die beim erfindungsgemäßen Verfahren verwendet werden, sind beispielsweise Hydroxide, Carbonate, Hydrogencarbonate, sekundäre und tertiäre Phosphate, Borate oder Acetate der Metalle der ersten bis dritten Gruppe des Periodensystems, vorzugsweise die Natrium- und Kaliumverbindungen sowie die Calciumverbindungen.

Die als Reaktionsbeschleuniger verwendeten Pyridinsulfonsäuren oder Pyridincarbonsäuren sind insbesondere Pyridin-mono-, di- und trisulfonsäuren. Pyridin-mono-, di- und -tri-carbonsäuren, weiterhin deren im Heterocyclus durch nichtionogene Substituenten substituierten Derivate, wie beispielsweise Methyl- und äthylsubstituierte Pyridinsulfonsäuren oder -carbonsäuren. Solche Pyridinverbindungen sind beispielsweise die Pyridin-2-sulfon-säure, Pyridin-3-sulfonsäure, Pyridin-4-sulfonsäure, Pyridin-2-carbonsäure, Pyridin-3-carbonsäure, Pyridin-4-carbonsäure, Pyridin-2,3-dicarbonsäure, Pyridin-2,4-dicarbonsäure, Pyridin-2,5-dicarbonsäure, Pyridin-2,6-dicarbonsäure, Pydridin-3,4-dicarbonsäure, Pydridin-3,5-dicarbonsäure, Pydridin-2,3,4-tricarbonsäure, Pyridin-2,4,5-tricarbonsäure, 2-Methylpyridin-3-sulfon-säure, 4-Methyl-pyridin-3-carbonsäure, 4-Äthylpyridin-3-carbonsäure, 6-Methylpyridin-3-carbonsäure, 4,6-Di-methylpyridin-2-carbonsäure, 2,6-Dimethylpyridin-3-carbonsäure und 2-Methylpyridin-3,4-dicarbonsäure. Besonders bevorzugt und vorteilhaft ist die Verwendung von Pyridin-3-carbonsäure (Nicotinsäure) die praktisch untoxisch und geruchlos ist (DE-PS 2 824 211 und DE-OS 2 906 442).

Die Isolierung der nach den vorstehend beschriebenen Verfahren erhaltenen Phthalocyaninfarbstoffe erfolgt in üblicher Weise durch Aussalzen, beispielsweise mit Natrium- oder Kaliumchlorid, und/oder durch Ansäuern mit einer Mineralsäure oder durch Eindampfen der neutralen oder schwach sauren wäßrigen Farbstofflösung, vorzugsweise bei mäßig erhöhter Temperatur und vermindertem Druck.

Die Verbindungen der Formel (1) werden in der Regel in Form ihrer Salze, bevorzugt in Form der Alkalimetallsalze, wie der Natrium- und Kaliumsalze, erhalten und finden als solche ihre Verendung zum Färben und Bedrucken von Fasermaterialien aus Wolle, Seide, linearen Polyamiden, insbesondere jedoch aus hydroxylgruppenhaltigen Materialien wie Cellulose, beispielsweise Leinen, Regeneratcellulose und vor allem Baumwolle, weiterhin zum Färben von Leder.

Die Herstellung der Färbungen mit den erfindungsgemäßen Farbstoffen erfolgt in üblicher Weise,

beispielsweise so, daß man das Fasermaterial mit einer wäßrigen Lösung des Farbstoffs, die gegebenenfalls alkalisch wirkende Mittel und neutrale anorganische Salze enthält kalt oder bei mäßig erhöhter Temperatur imprägniert, abquetscht und die so aufgebrachten Farbstoffe, gegebenenfalls nach einer Zwischentrocknung, fixiert. Wenn die verwendete Klotzflotte ein alkalisch wirkendes Mittel enthält, erfolgt die anschließende Fixierung beispielsweise durch kurzzeitiges Liegenlassen der imprägnierten Ware. Bei diesem bekannten und in der Färbepraxis weit verbreiteten Klotz-Kurzverweil-Verfahren zeichnen sich die nach dem erfindungsgemäßen Verfahren hergestellten Farbstoffe infolge ihres überraschend hohen Diffusionsvermögens und ihrer erhöhten Reaktivität dadurch aus, daß sie bereits nach 4 Stunden Verweilzeit die volle Farbstärke erreichen, während mit den strukturell nächst vergleichbaren Farbstoffen der oben genannten Literaturstellen die volle Farbstärke erst nach etwa 12 bis Stunden erreicht wird. Somit lassen sich mit den erfindungsgemäßen Farbstoffen die Färbeprozesse vorteilhaft in wesentlich kürzerer Zeit durchführen, was den großen Vorteil hat, daß die Färbeapparate besser genutzt werden können und ein höherer Duchsatz an zu färbendem Material ermöglicht wird.

Bei Einsatz der erfindungsgemäßen Farbstoffe nach dem Ausziehverfahren bauen diese zu einer um 20 bis 30 % höheren Farbstärke auf als die nächst vergleichbaren Farbstoffe der genannten Literaturstellen, d.h. zur Erzielung gleich tiefer Färbungen muß weniger Farbstoff eingesetzt werden, wodurch weniger Farbstoff in die Färbereiabwässer gelangt. Somit verhalten sich die erfindungsgemäßen Farbstoffe ökologisch günstiger.

Auch im Textildruck wird bei Verwendung der erfindungsgemäßen Farbstoffe ein etwas günstigerer Farbaufbau erzielt. Zudem färben die neuen Farbstoffe beispielsweise nicht laugierte Regeneratcellulose besser an als die bekannten Farbstoffe.

Auf Wolle bauen die neuen Farbstoffe ebenfalls zu wesentlich höherer Farbstärke auf.

Auf den vorstehend genannten Fasermaterialien werden mit den erfindungsgemäßen Farbstoffen sehr wertvolle farbstarke Färbungen und Drucke erhalten, die sich durch sehr hohe Lichtechtheiten, durch gute bis sehr gute Naßechtheiten und gute bis sehr gute Reibechtheiten auszeichnen.

Die neuen Farbstoffe besitzen eine gute Wasserlöslichkeit und eine sehr gute Löslichkeit in alkalischen, elektrolythaltigen Färbe- und Klotzflotten.

Die nachstehenden Beispiele dienen zur Erläuterung der Erfindung. Die Teile sind Gewichtsteile, die Angaben in Prozent sind Gewichtsprozent, sofern nichts anderes vermerkt ist.

Gewichtsteile verhalten sich zu Volumenteilen wie das Kilogramm zum Liter.

In der CSSR-Patentschrift 168 327 (Beispiele 1 und 2) werden Kupferphthalocyaninfarbstoffe ähnlichert Struktur beschrieben.

**Beispiel 1**

84.3 Teile 3-β-Sulfatoäthylsulfonyl-anilin werden in 160 Teilen Wasser (≙ 1.875 Mol/l) suspendiert und durch Einstreuen von Natriumbicarbonat bei pH 6 in Lösung gebracht. In diese Lösung trägt man 87.2 Teile Kupferpthalocyanintrisulfochlorid in trockener Form oder in Form eines schwach feuchten Preßkuchens ein, versetzt mit 5 Teilen Pyridin und führt die Kondensation bei 10° bis 13°C durch, wobei durch Zugabe von Natriumbicarbonat ein pH-Bereich von 5.5 bis 6 eingehalten wird. Sollte im Verlauf der Reaktion das Kondensationsgemisch eine breiige Konsistenz annehmen, so kann nach etwa 3 bis 4 Stunden nach und nach mit etwas Wasser verdünnt werden, um eine gute Rührbarkeit des Ansatzes zu gewährleisten. Man rührt solange nach, bis der pH-Wert konstant bleibt, was nach etwa 6 Stunden eintritt. Dann verdünnt man mit etwa 100 Teilen Wasser und rührt weitere 2 Stunden bei etwa 40°C nach. Anschließend wird ein kleiner, genau abgemessener Anteil der Farbstofflösung entnommen und davon der Diazotierwert bestimmt, woraus sich der Kondensationsgrad c (vergl. die allgemeine Formel (1)) errechnet.

Dann wird der Farbstoff durch Zugabe von Natriumchlorid (in einer Menge von 15 %, bezogen auf das Lösungsvolumen) ausgefällt, abgesaugt und bei 60°C unter reduziertem Druck getrocknet.

Es wird ein salzhaltiger, türkisblauer Farbstoff erhalten, dessen Konstitution nach obiger Bestimmung und nach der Analyse, in Form der freien Säure geschrieben, etwa der Formel

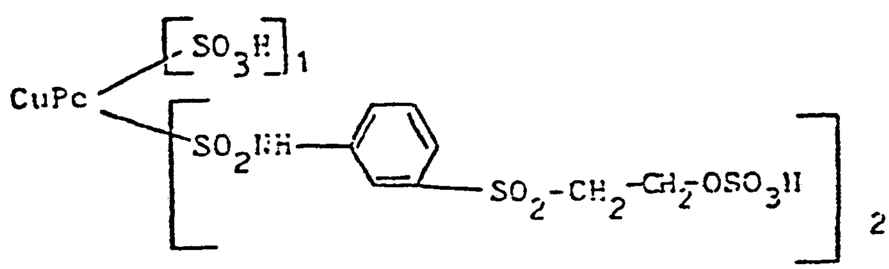

entspricht. Der Farbstoff liefert nach den für faserreaktive Farbstoffe üblichen und bekannten Applikations- und Fixiermethoden auf Baumwolle klare, türkisblaue Färbungen von hoher Farbstärke.

Gegenüber den in der deutschen Patentschrift 1 179 317, Beispiel 1, bzw. in der deutschen Patentschrift 2 824 211, Beispiel 1, beschriebenen Farbstoffen zeichnet sich der erfindungsgemäße Farbstoff dadurch aus, daß mit ihm im Klotz-Kurzverweil-Verfahren bereits nach 4 Stunden der volle Farbaufbau erreicht wird, während mit den bekannten Farbstoffen dazu zwischen 12 und 24 Stunden benötigt werden. Beim Färben nach dem Ausziehverfahrn wird mit dem erfindungsgemäßen Farbstoff gegenüber den bereits bekannten Farbstoffen ein um etwa 20 bis 30 % höherer Farbaufbau erzielt.

Verfährt man nach den in der deutschen Patentschrift 1 179 317, Beispiel 1, gemachten Angaben und führt die Kondensationsreaktion in der dort beschriebenen starken Verdünnung durch (0.2 Mol 3-β-Sulfatoäthylsulfonyl-anilin pro Liter Wasser als Reaktionsmedium), so erhält man einen Farbstoff der Formel

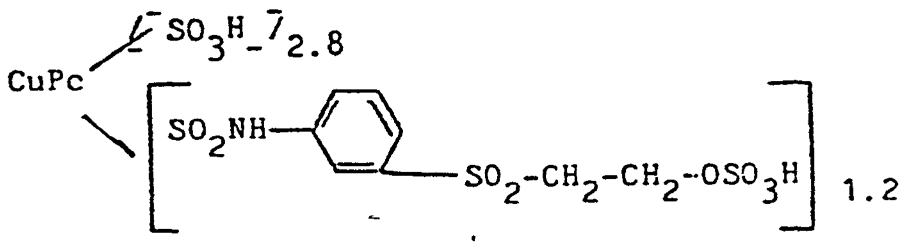

der die oben genannten anwendungstechnischen Mängel gegenüber dem erfindungsgemäßen Farbstoff aufweist.

**Beispiel 2**

73.1 Teile 3-β-Sulfatoäthylsulfonyl-anilin werden in 130 Teilen Wasser durch Zugabe von etwa 20 Teilen Natriumbicarbonat bei pH 6 gelöst. In diese Lösung trägt man unter Rühren 97 Teile Kupferphthalocyanin-(3)-tetrasulfochlorid in trockner Form oder in Form eines feuchten Preßkuchens ein, fügt 5 Teile Pyridin zu und führt die Kondensation bei 10 bis 13°C durch, wobei ein pH-Bereich von 5.5 bis 6 durch Einstreuen von Natriumbicarbonat eingehalten wird. Nach etwa 4 bis 5 Stunden (wenn eine Tüpfelprobe der Kondensationsmischung auf Filterpapier fast einheitlich verläuft) werden 9 Teile N-Methylaminoäthanol (in Form des Hydrochlorids in wäßriger Lösung) zugesetzt und die Kondensation bei pH 6 durch Rühren über Nacht bei Raumtemperatur vervollständigt. Es wird mit etwa 100 bis 200 Teilen Wasser verdünnt, ein genau gemessener Anteil der Farbstofflösung entnommen und von dieser Probe der Diazotierwert bestimmt. Daraus ergibt sich der Anteil an nicht einkondensiertem 3-β-Sulfatoäthylsulfonylanilin und durch Differenzbildung zur insgesamt eingesetzten Menge an 3-β-Sulfatoäthylsulfonyl-anilin der Kondensationsgrad c. Der Farbstoff wird durch Verrühren mit Natriumchlorid (in einer Menge von 20 % bezogen auf das Lösungsvolumen) isoliert, abgesaugt und bei 50°C unter vermindertem Druck getrocknet.

Man erhält einen salzhaltigen, türkisblauen Farbstoff, dessen Konstitution nach obiger Bestimmung und nach der Analyse etwa der Formel (als freie Säure geschrieben)

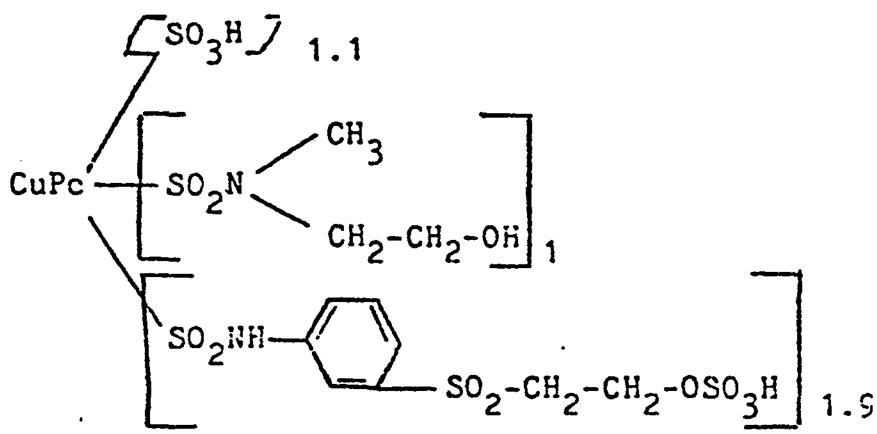

entspricht.

Mit diesem Farbstoff erhält man nach den für faserreaktive Farbstoffe üblichen und bekannten Applikations- und Fixiermethoden auf Baumwolle und Wolle klare, türkisblaue Färbungen und Drucke mit hoher Farbstärke.

Gegenüber den in der deutschen Patentschrift 1 179 317, Beispiel 2, bzw. in der deutschcn Patentschrift 1 283 997, Beispiel 2, bzw. in der deutschen Patentschrift 2 824 211, Beispiel 2, sowie Beispiel 3a, beschriebenen, strukturell nächst vergleichbaren Farbstoffen baut der erfindungsgemäße Farbstoff auf Baumwolle im Klotz-Kurzverweil-Verfahren bereits nach 4 Stunden Verweilzeit zu seiner vollen Farbstärke auf, während mit den bekannten Farbstoffen dazu 24 Stunden benötigt werden, wobei eine etwas geringere Farbausbeute erhalten wird.

Im Ausziehverfahren wird mit dem erfindungsgemäßen Farbstoff auf Baumwolle ein um etwa 20 % höherer Farbaufbau errcicht. Des gleichen werden mit diesem Farbstoff auf Wolle beim Färben aus schwach essigsaurem Färbebad farbstärkere Färbungen erzielt.

(Bei allen Vergleichsfärbungen kommen jeweils Farbstoffmengen mit gleichen Reinfarbstoffgebalt zur Anwendung.)

Die türkisblauen Färbungen und Drucke mit des beanspruchten Farbstoff zeichnen sich durch sehr gute Lichtechtheiten und sehr gute Beständigkeit gegenüber Waschbehandlungen, sowie durch gute bis sehr gute Reibechtheit aus.

Bei Nacharbeitung des in der deutschen Patentschrift 1 283 997, Beispiel 2, genannten strukturell nächst vergleichbaren Farbstoffs wird ein Produkt der Formel

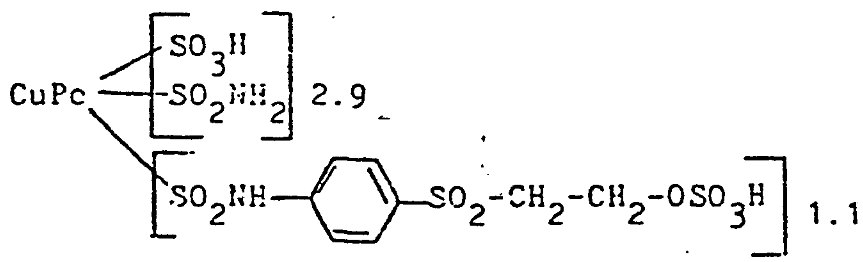

erhalten, das die oben angeführten coloristischen Nachteile gegenüber dem erfindungsgemäßen Farbstoff zeigt.

**Beispiel 2a**

Verfährt man in der in Beispiel 2 beschriebenen Weise, setzt jedoch anstelle des dort verwendeten N-Methylaminoäthanols die äquivalente Menge eines der nachfolgend genannten Amine ein, so erhält man erfindungsgemäß ebenfalls Farbstoffe mit vergleichbar sehr guten coloristischen Eigenschaften, in denen diese erfindungsgemäßen Farbstoffe den strukturell nächst vergleichbaren, bekannten Farbstoffen deutlich überlegen sind:

Aminoäthanol, Diäthanolamin, Morpholin, Methoxyäthylamin, 2-Methoxypropylamin, 3-i-Propoxypropylamin, 3-Aminopropanol, Hydroxyäthoxyäthylamin, 3-Acetaminopropylamin, Ammoniak, Methylamin, Athylamin, n- und iso-Propylamin, n-, iso-, sec.- und tert.-Butylamin, Aminopropionsäure, ε-Aminocapronsäure, Cyclohexylamin, Phenyläthylamin, N-β-Hydroxyäthyläthylendiamin, Piperidin, Anilin oder 4-Amino-benzoesäure.

**Beispiel 3**

Ein Gemisch aus 56.2 Teilen 4-β-Sulfatoäthylsulfonyl-ani-lin und 39.3 Teilen 3-β-Sulfatoäthylsulfonyl-anilin wird in 185 Teilen Wasser suspendiert (≙ 1.84 Mol/l). Durch Zugabe von Natriumbicarbonat stellt man auf pH 6 bis 6.5, wodurch eine Lösung entsteht. In diese Lösung trägt man unter gutem Rühren 97 Teile Kupferphthalocyanin-(3)-tetra-sulfochlorid in trockener Form oder in Form eines schwach feuchten Preßkuchens ein, gibt 5 Teile Pyridin zu und läßt die Kondensation im Temperaturbereich von 10° bis 15°C ablaufen, wobei durch Einsetzen von Natriumbicarbonat der pH-Wert des Reaktionsgemisches etwa zwischen 5.5 und 6 gehalten wird. Nach ca. 5 bis 6 Stunden verdünnt man den Ansatz mit etwa 200 Teilen Wasser, gibt 11.3 Teile N-Methylaminoäthanol (in Form des Hydrochlorids in wäßriger Lösung) zu und vervollständiet die Kondensation durch Rühren über Nacht bei Raumtemperatur, wobei mit Hilfe eines Phosphatpuffers ein pH-Wert von 6 eingehalten wird. Nach Bestimmung des Kondensationsgrades c nach der im Beispiel 1 bzw. 2 beschriebenen Methode wird der Farbstoff durch Aussalzen bei 35° bis 40°C mit Kaliumchlorid (in einer Menge von 15 %, bezogen auf das Lösungsvolumen) isoliert, abgesaugt und bei 50° bis 60°C unter vermindertem Druck getrocknet.

Es wird ein türkisblauer, salzhaltiger Farbstoff erhalten, dessen Konstitution nach obiger Bestimmung des Kondensationsgrades ein Isomerengemisch etwa der Formel (in Form der freien Säure geschrieben)

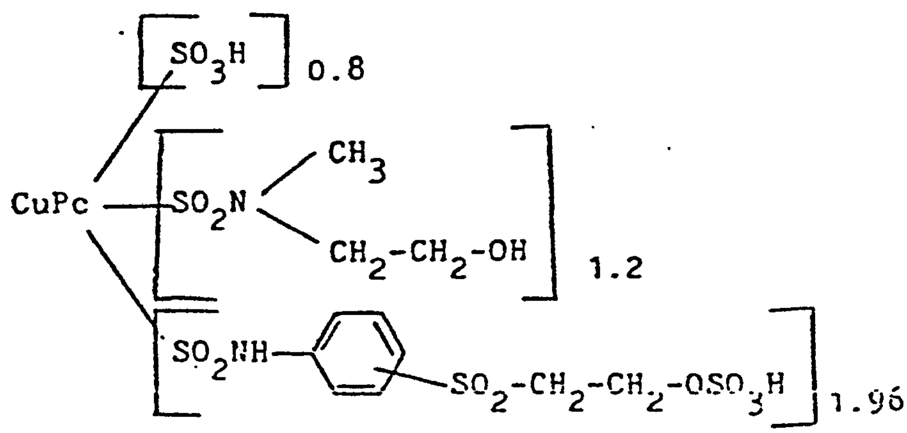

ist. Man erhält mit diesem Farbstoff nach den für faserreaktive Farbstoffe üblichen Applikations- und Fixiermethoden auf Baumwolle und Wolle klare, türkisblaue Färbungen und Drucke mit sehr guten Echtheitseigenschaften. Hervorzuheben ist ebenfalls wieder der schnelle Farbaufbau bei Anwendung nach Klotz-Färbeverfahren, sowie die gute Farbtiefe, die nach dem Auszieh-Färbeverfahren erreicht wird.

**Beispiel 4**

Man verfährt in der in Beispiel 2 beschriebenen Verfahrensweise der Kondensation von 73.1 Teilen 3-β-Sulfato-äthylsulfonylanilin mit 97 Teilen Kupferphthalocyanin-(3)-tetrasulfochlorid, setzt jedoch anstelle der dort verwendeten 9 Teile N-Methylaminoäthanol 12 Teile eines aus etwa gleichen Anteilen bestehenden Amingemisches von N-Methylaminoäthanol, Athanolamin, Diäthanolamin, Morpholin und Methoxypropylamin ein.

Das resultierende Farbstoff-Gemisch wird nach Klärung mit Kohle/Kieselgur und anschließender Sprühtrocknung als salzhaltiges, blaugraues Pulver erhalten. Der Kondensationsgrad c wurde nach den Angaben des Beispiels 2 zu 1.92 ermittelt.

Das erhaltene Farbstoff-Gemisch ergibt nach den für faserreaktive Farbstoffe üblichen Applikations- und Fixiermethoden auf Baumwolle und Wolle klare, türkisblaue Färbungen. Es zeichnet sich durch hohe Fixiergeschwindigkeit bei Anwendung nach Klotz-Färbeverfahren und durch sehr guten Farbaufbau im Ausziehverfahren aus. Die Echtheiten der Färbungen und Drucke sind sehr gut.

**Beispiel 5**

Man führt die Kondensation von 78.7 Teilen 3-β-Sulfato-äthylsulfonyl-anilin mit 92 Teilen Kupferphthalocyanin-(3)-sulfochlorid, das im Durchschnitt 3,6 Sulfochloridgruppen enthält, nach den Angaben von Beispiel 2 durch, setzt jedoch anstelle des dort verwendeten N-Methylaminoäthanols 17 Teile Diglykolamin ein. Nach Bestimmung der Anzahl an Reaktivgruppen nach den Angaben von Beispiel 2 wird der Farbstoff mit Kaliumchlorid (in einer Menge von 12,5 % bezogen auf das Lösungsvolumen) isoliert, abgesaugt und bei 50°C unter vermindertem Druck getrocknet. Man erhält einen salzhaltigen, türkisblauen Farbstoff, dem folgende Formel zuzumessen ist:

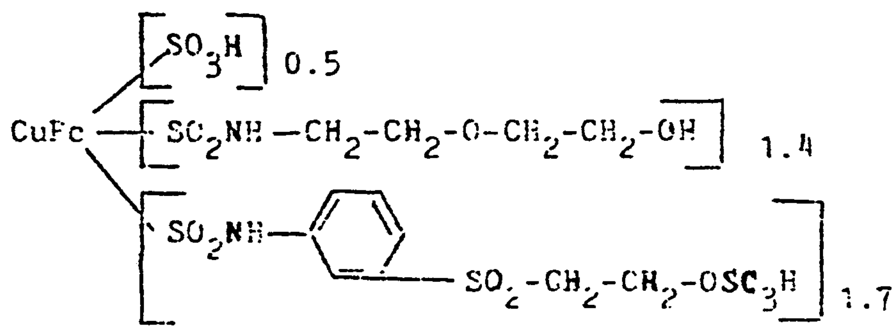

Mit diesem Farbstoff erhält man nach den für faserreaktive Farbstoffe üblichen Fixiermethoden auf Cellulosefasern klare, türkisblaue Färbungen. Seine Vorzüge gegenüber strukturell ähnlichen Farbstoffen des Standes dcr Technik sind wiederum seine hohe Fixiergeschwindigkeit sowie sein guter Farbaufbau zu höherer Farbstärke.

**Beispiel 5a**

Zu Farbstoffen mit vergleichbar guten anwendungstechnischen Eigenschaften gelangt man, wenn man anstelle des in Beispiel 5 eingesetzten Diglykolamins die äquivalente Menge eines der nachfolgend genannten Amine verwendet: Äthanolamin, Diäthanolamin, Morpholin, 3-i-Propoxypropyl-amin, 3-(N'-Phenylureido)-propylamin, N-Hydroxyäthyläthylendiamin.

**Beispiel 6**

60.3 Teile 4-β-Hydroxyäthylsulfonyl-anilin werden in 180 Teilen Wasser verrührt. Anschließend werden unter guter Rührung 92 Teile Kupferphthalocyanin-(3)-sulfochlorid, das im Durchschnitt 3.6 Sulfochloridgrupp enthält, eingetragen. Nach Zugabe von 12.5 Teilen Nicotinsäure erwärmt man auf 35° C und hält während der Kondensation durch Einstreuen von Natriumbicarbonat eincn pH-Wert von etwa 6.5 ein. Nach ca. 2 Stunden Reaktionsdauer verdünnt man mit etwa 100 Teilen Wasser und setzt die Kondensation bei 35° C fort. Nach weiteren 2 - 3 Stunden kühlt man den Ansatz mit wenig Eis auf Raumtemperatur ab, versetzt mit 17.5 Teilen 3-Isopropoxypropylamin (als Hydrochlorid in Wasser gelöst) und vervollständigt die Kondensation durch Rühren über Nacht bei einem pH-Wert von etwa 6, der durch einen Phosphatpuffer eingehalten wird.

Der Farbstoff wird entweder durch Sprühtrocknung oder durch Ansäuern mit Schwefelsäure isoliert und bei 60°C unter vermindertem Druck getrocknet.

Zur Überführung in den Schwefelsäureester werden 100 Teile des so hergestellten β-Hydroxyäthylsulfonyl-Farbstoffs bei Taumtemperatur in 750 Volumenteile Schwefelsäure-Monohydrat unter guter Rührung und Außenkühlung eingetragen. Man verrührt mehrere Stunden bei Raumtemperatur und gießt dann die schwefelsaure Lösung vorsichtig auf Eis. Der dabei ausfallende Farbstoff wird abgesaugt, in Wasser mit Natriumbicarbonat neutral gelöst und mit 7.5 % Kaliumchlorid, bezogen auf das Lösungsvolumen, ausgesalzen, abgesaugt und bei 50° C unter vermindertem Druck getrocknet. Es wird ein salzhaltiger, türkisblauer Farbstoff erhalten, der, in Form der freien Säure geschrieben, der Formel

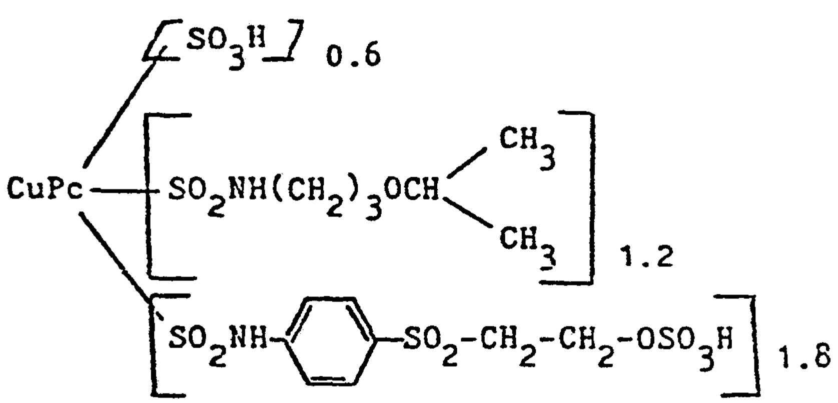

entspricht. Der Farbstoff zeichnet sich ähnlich wie die vorstehend beschriebenen Farbstoffe durch sein schnelles Fixierverhalten und durch seinen guten Färbaufbau beim Färben von Cellulosefasern aus. Die klaren türkisblauen Färbungen und Drucke besitzen gute Echtheitseigenschaften.

**Beispiel 7**

73.1 Teile 3-β-Sulfatoäthylsulfonyl-anilin werden in 150 Teilen Wasser mit Hilfe von Natriumbicarbonat neutral gelöst. Dann fügt man 9.2 Teile Aminoäthanol in Form des Hydrochlorids sowie 5 Teile Pyridin zu, kühlt auf 10° bis 12° C ab und trägt bei guter Rührung 96.5 Teile Nickel-phthalocyanin-(3)-tetrasulfochlorid ein. Durch anteilweise Zugabe von Natriumbicarbonat wird der pH-Wert bei 5.5 bis 6 gehalten und so die Kondensation durch Nachrühren über Nacht beendet. Der Farbstoff wird mit Kaliumchlorid ausgesalzen und suf übliche Weise isoliert.

Der so erhaltene Farbstoff entspricht der Formel

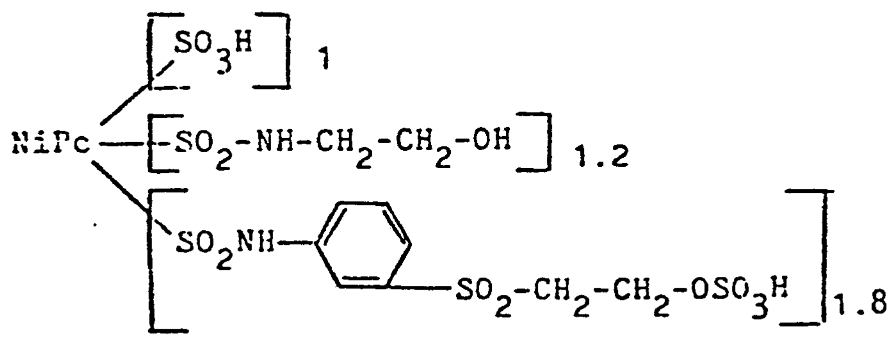

Er ergibt, als Reaktivfarbstoff angewandt, bei schnellem Fixierverhalten und guter Farbausbeute auf Cellulosefasermaterialien eine klare, blaustichige Grünfärbung mit guten Echtheitseigenschaften.

**Patentansprüche:**

1. Wasserlösliche faserreaktive Phthalocyaninverbindungen der allgemeinen Formel (1)

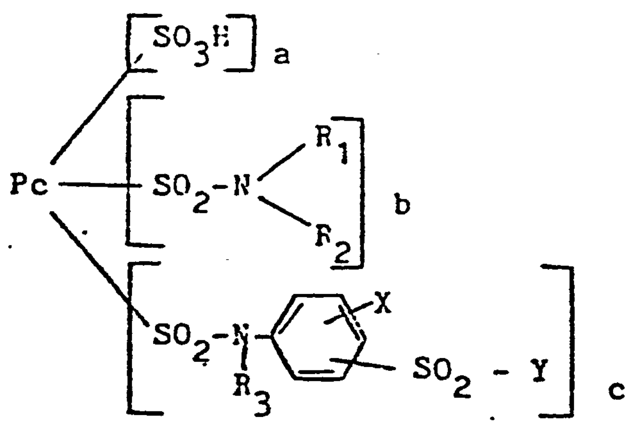

(1)

in welcher Pc den Rest des metallfreien oder metallhaltigen Phthalocyanins, bedeutet, wobei die Sulfonsäure- bzw. Sulfonamidgruppen in den 3-Stellungen der aromatischen Ringe des Phthalocyanins gebunden sind, $R_1$ und $R_2$ jeweils ein Wasserstoffatom oder eine Alkylgruppe von 1 - 6 Kohlenstoffatomen, die durch Mathoxy-, Äthoxy-, Propoxy-, $C_2H_5$-O-$C_2H_4$-O-, Cyano-, Acetylamino-, Carboxy-, $HO_3S$-, $H_2O_3P$-, Phenyl-, Methylphenyl-, Methoxyphenyl-, Dimethylamino-, Diäthylamino-, β-Hydroxyäthylamino-, β-Hydroxyäthoxy-, N-Phenylureido-, N-Alkyl

$$\overline{C_1-C_4}$$

ureido- oder N-Cycloalkylureidogruppen substituiert sein kann, oder eine Allyl-, 2-Methallyl-, Crotyl- oder Cycloalkylgruppe bedeuten, und $R_1$ und $R_2$ zusammen mit dem Stickstoffatom den Rest eines heterocyclischen gesättigten oder ungesättigten Rings darstellen können, oder $R_1$ und $R_2$ einen Phenylrest, der durch Methyl-, Äthyl-, Methoxy-, Äthoxy-, Carboxy- oder Sulfonsäuregruppen substituiert sein kann, darstellen, wobei $R_1$ und $R_2$ jeweils gleich oder verschieden sein können, $R_2$ ein Wasserstoffatom oder eine Alkylgruppe von 1 bis 4

Kohlenstoffatomen, welche durch Hydroxy- oder Carboxygruppen substituiert sein kann, bedeutet, X ein Wasserstoffatom oder eine Alkyl- oder Alkoxygruppe von 1 bis 4 Kohlenstoffatomen darstellt, Y die Vinylgruppe oder die Gruppierung der Formel $-CH_2-CH_2-Z$ darstellt, in welcher Z einen anorganischen oder organischen, alkalisch eliminierbaren Rest bedeutet, a eine Zahl zwischen 0 und 2, b eine Zahl zwischen 0 und 2 und c eine Zahl zwischen 1,7 und 2,6 darstellen, mit der Maßgabe, daß die Summe aus a, b und c höchstens 4 ist.

2. Verbindung der Formel

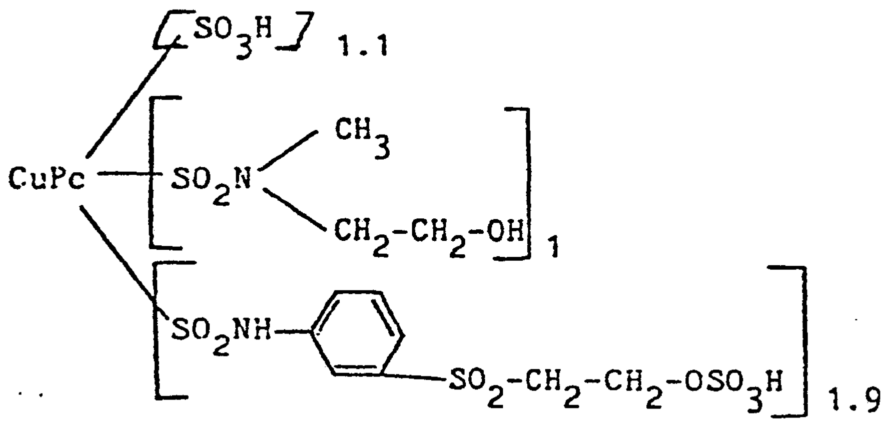

3. Verbindung der Formel

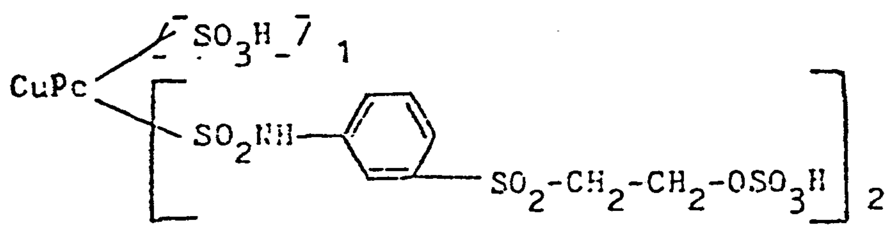

4. Verfahren zur Herstellung wasserlöslicher faserreaktiver Phthalocyaninverbindungen der in Anspruch 1 genannten allgemeinen Formel (1), dadurch gekennzeichnet, daß man ein Phthalocyaninsulfochlorid der allgemeinen Formel (2)

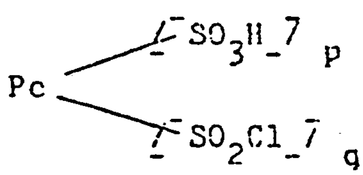

(2)

in welcher Pc den Rest des metallfreien oder metallhaltigen Phthalocyanins bedeutet, p eine Zahl von 0 bis 1 und 9 eine Zahl von 2 bis 4 bedeuten mit der Maßgabe, daß die Summe aus p und 9 höchstens 4 ist, in wäßrigem Medium mit einem Amin der Formel (3)

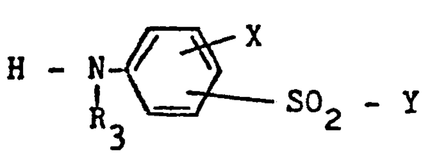

(3)

in welcher $R_3$, X und Y die weiter oben genannten Bedeutungen haben, in Form einer konzentrierten wäßrigen Lösung bzw. Suspension von 1,5 bis 3 Mol pro Liter Wasser bei einem pH-Wert von etwa 3 bis etwa 8 und bei einer Temperatur von 0° bis etwa 100° C, in Gegenwart eines säurebindenden Mittels und in Gegenwart eines Reaktionsbeschleunigers umsetzt und gegebenenfalls mit einem weiteren Amin der allgemeinen Formel (4)

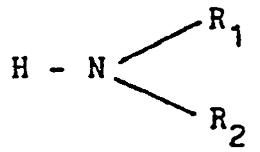

(4)

in welcher $R_1$ und $R_2$ die in Anspruch 1 genannten Bedeutungen haben, umsetzt bei einem pH-Wert von etwa 3 bis 7 und bei einer Temperatur von 0°C bis etwa 30°C in Gegenwart eines säurebindenden Mittels, oder daß man das Phthalocyaninsulfochlorid der Formel (2) mit einem Gemisch der Amine der Formeln (3) und (4) bei einem pH-Wert von etwa 3 bis 7 und bei einer Temperatur von 0° bis etwa 30°C in Gegenwart eines säurebindenden Mittels und eines Reaktionsbeschleunigers umsetzt,und gegebenenfalls, wenn Y im eingesetzten Amin der Formel (3) die β-Hydroxyäthylgruppe darstellt, man die erhaltenen Phthalocyaninverbindungen der allgemeinen Formel (1) durch Behandlung mit einem Sulfatierungsmittel in die entsprechenden Phthalocyaninverbindungen, in welcher Y die β-Sulfatoäthylgruppe bedeutet, überführt.

5. Verwendung der in Anspruch 1 genannten wasserlöslichen Phthalocyaninverbindungen als Farbstoffe.

6. Wolle, Seide, Leder oder Fasermaterialien aus linearen Polyamiden oder hydroxylgruppenhaltigen Materialien, die mit den in Anspruch 1 genannten Phthalocyaninverbindungen gefärbt oder bedruckt worden sind.

**Revendications**

1. Phtalocyamines hydrosolubles, pouvant réagir avec les fibres, de formule générale (1):

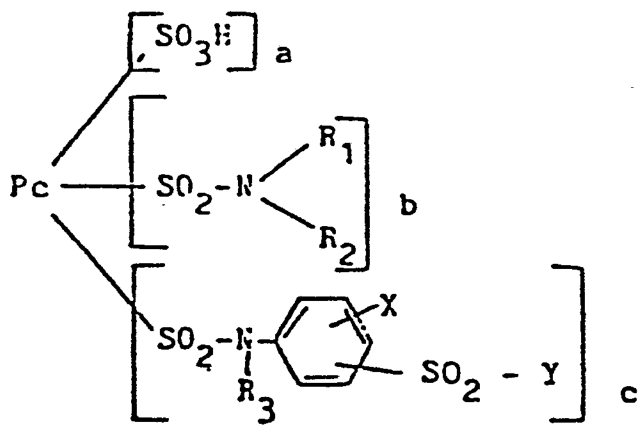

(1)

dans laquelle Pc représente le reste de la phtalocyanine sans métal ou contenant du métal, les groupes acides sulfoniques ou sulfonamides étant fixés sur les positions 3 du noyau aromatique de la phtalocyanine; $R_1$ et $R_2$représentent à chaque fois un atome d'hydrogène ou un groupe alkyle ayant1 à 6 atomes de carbone (pouvant être substitués par des groupes méthoxy, éthoxy, propoxy, $C_2H_5$-O-$C_2H_4$-O-, cyano, acétylamino, carboxy, $HO_3S$-, $H_2O_3P$-, phényle, méthylphényle, méthoxyphényle, diméthylamino, diéthylamino, hydroxy-2 éthyl amino, hydroxy-2 éthoxy, N-phényluréido, N-alkyl (en $C_1$ à $C_4$)uréido ou N-cycloalkyluréido, ou un groupe allyle, méthallyl-2, crotyle ou cycloalkyle, et $R_1$ et $R_2$ peuvent représenter, quand ils sont pris avec l'atome d'azote, le reste d'un noyau hétérocyclique saturé ou insaturé, ou $R_1$ et $R_2$ représentent un reste phényle (qui peut être substitué par des groupes méthyle, éthyle, méthoxy, éthoxy, carboxy ou acides sulfoniques), les symboles $R_1$ et $R_2$ pouvant être à chaque fois identiques ou différents; $R_3$ représente un atome d'hydrogène ou un groupe alkyle ayant 1 à 4 atomes de carbone (pouvant être substitué par des groupes hydroxy ou carboxy); X représente un atome d'hydrogène ou un groupe alkyle ou alcoxy ayant 1 à 4 atomes de carbone; Y représente le groupe vinyle ou le groupement de formule -$CH_2$-$CH_2$-Z, dans laquelle Z représente un reste minéral ou organique, éliminable par voie alcaline, a est un nombre valant de 0 à 2, b est un nombre valant de 0 à 2 et c est un nombre de valeur comprise entre 1,7 et 2,6; à la condition que la somme (a + b + c) soit au maximum égale à 4. 2. Composé de formule:

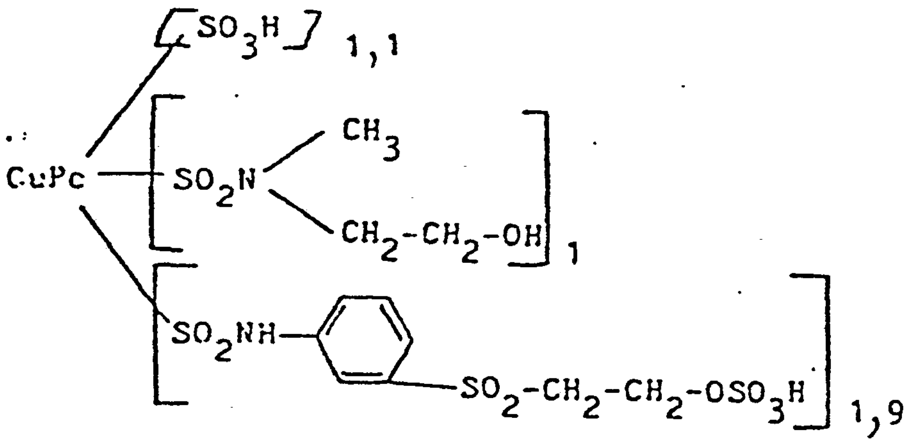

3. Composé de formule:

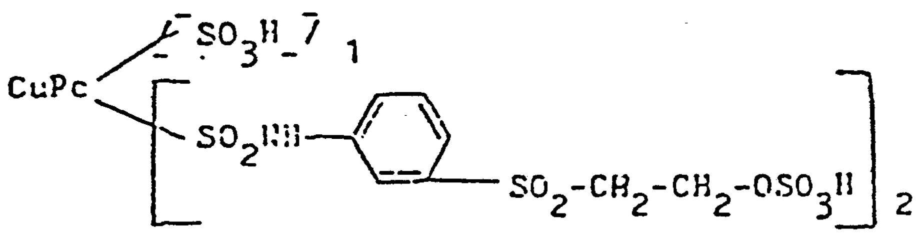

4. Procédé pour préparer des phtalocyanines hydrosolubles pouvant réagir avec les fibres, répondant à la formule générale (1) citée à la revendication 1, caractérisé en ce qu' on fait réagir un sulfochlorure de phtalocyamine, de formule générale (2):

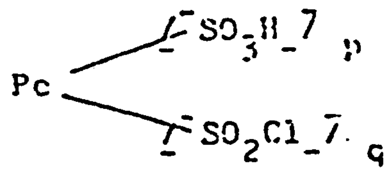

(2)

[ dans laquelle Pc représente le reste de la phtalocyanines sans métal ou contenant du métal; p est un nombre valant de 0 à 1 et q est un nombre valant 2 à 4, 4 la condition que la somme de (p + q) soit au maximum égale à 4] en milieu aqueux avec une amine de formule (3)

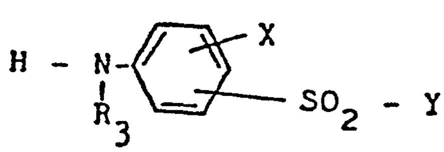

(3)

(dans laquelle $R_3$, X et Y ont les sens indiqués plus haut) sous forme d'une solution ou suspension aqueuse concentrée de 1,5 à 4 moles par litre d'eau

à un pH d'environ 3 à environ 8 et à une température de 0° à 100°C, en présence d'un agent de fixation des acides et en présence d'un accélérateur de réaction, et éventuellement on fait réagir avec une autre amine de formule générale (4):

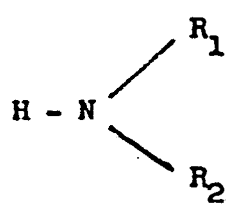

(4)

(dans laquelle $R_1$ et $R_2$ ont les sens indiqués à la revendication 1), à un pH d'environ 3 à 7 et à une température de 0° C à 30490 C en présence d'un agent de fixation des acides, ou bien l'on fait réagir le sulfochlorure de phtalocyanie de formule (2) avec un mélange des amines répondant aux formules (3) et (4), à un pH d'environ 3 à 7 et à une température de 0° à environ 30° C en présence d'un agent de fixation des acides et d'un accélérateur de réaction et éventuellement, quand, dans l'amine utilisée de formule (3), Y représente le groupe hydroxy-2 éthyle, on transforme les phtalocyanines obtenues de formule générale (1), par traitement avec un agentde sulfatation, en les phtalocyanines correspondantes, dans lesquelles Y représente le groupe sulfato-2 éthyle.

5. Utilisation des phtalocyamines hydrosolubles, citées à la revendication 1, à titre de colorants.

6. Laine, soie, cuir ou matières fibreuses en des polyamides linéaires ou matières contenat des groupes hydroxyles, qui ont été teints ou imprimés à l'aide des phtalocyamines citées à la revendication 1.

**Claims:**

1. Water-soluble fiber-reactive phthalocyanine compounds of the general formula (1)

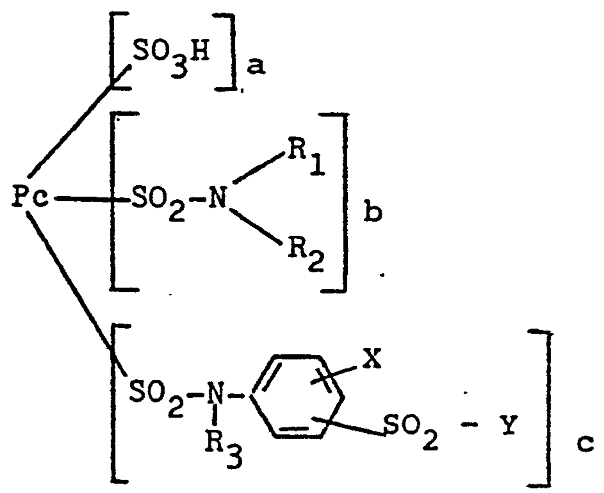

(1)

in which Pc denotes the radical of metal-free or metalcontaining phthalocyanine, with the sulfonic acid or sulfonamide groups being bonded in the 3-positions of the aromatic rings of the phthalocyanine, $R_1$ and $R_2$ each denote a hydrogen atom or an alkyl group of 1 - 6 carbon atoms which can be substituted by methoxy, ethoxy, propoxy, $C_2H_5$-O-$C_2H_4$-O-, cyano, acetylamino, carboxyl, $HO_3S$-, $H_2O_3P$-, phenyl, methylphenyl, methoxyphenyl, dimethylamino, diethylamino, β-hydroxyethylamino, β-hydroxyethoxy, N-phenylureido, N-alkyl-$C_1$-$C_4$-ureido or N-cycloalkylureido groups, or an allyl, 2-methallyl, crotyl or cycloalkyl group, and $R_1$ and $R_2$, together with the nitrogen atom, can represent the radical of 2 heterocyclic saturated or unsaturated ring, or $R_1$ and $R_2$ represent a phenyl radical which can be substituted by methyl, ethyl, methoxy, ethoxy, carboxyl or sulfonic acid groups, and $R_1$ and $R_2$ can in each case be identical or different, $R_3$ denotes a hydrogen atom or an alkyl group of 1 to 4 carbon atoms and which can be substituted by hydroxyl or carboxyl groups, X respresents a hydrogen atom or an alkyl or alkoxy group of 1 to 4 carbon atoms, Y respresents the vinyl group or the grouping of the formula -$CH_2$-$CH_2$-Z in which Z denotes an inorganic or organic radical which can be eliminated under alkaline conditions, a represents a number between 0 and 2, b represents a number between 0 and 2 and c represents a number between 1.7 and 2.6, with the proviso that the sum of a, b and c is at most 4.

2. The compound of the formula

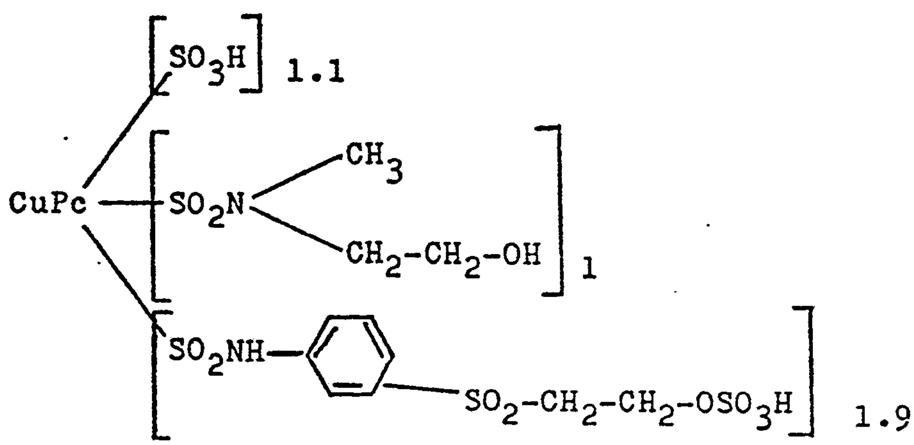

3. The compound of the formula

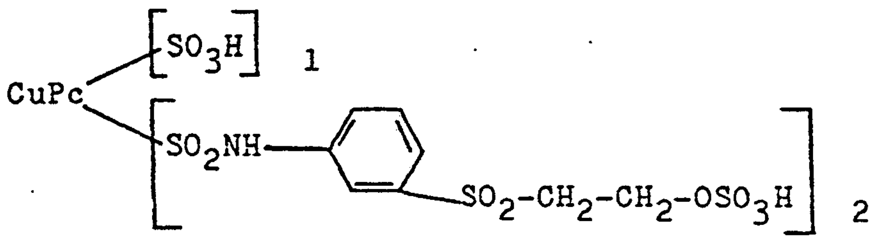

4. A process for preparing water-soluble fiber-reactive phthalocyanine compounds of the general formula (1) mentioned in claim 1, wherein a phthalocyaninesulfochloride of the general formula (2)

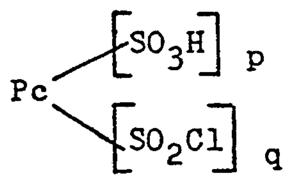

(2)

in which Pc denotes the radical of metal-free or metal-containing phthalocyanine, p denotes a number from 0 to 1 and q denotes a number from 2 to 4 with the proviso that the sum of p and q is at most 4, is reacted in an aqueous medium with an amine of the formula (3)

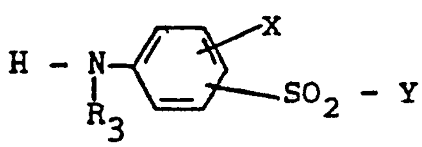

(3)

in which $R_3$, X and Y have the abovementioned meanings in the form of a concentrated aqueous solution or suspension of 1.5 to 3 moles per liter of water at a pH value of about 3 to about 8 and at 2 temperature of 0° to about 100° C, in the presence of an acid-binding agent and in the presence of 2 reaction accelerator, and if appropriate, the product is reacted with a further amine of the general formula (4)

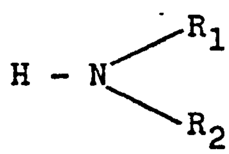

(4)

in which $R_1$ and $R_2$ have the meanings mentioned in claim 1, at a pH value of about 3 to 7 and at a temperature of 0° C to about 30° C in the presence of an acid-binding agent, or in which the phthalocyaninesulfochloride of the formula (2) is reacted with a mixture of the amines of the formulae (3) and (4) at a pH value of about 3 to 7 and at a temperature of 0° to about 30° C in the presence of an acid-binding agent and of a reaction accelerator and, if appropriate, if Y, in the employod amine of the formula (3), represents the, β -hydroxylethyl group, the phthalocyanine compounds obtained, of the formula (1), are converted by a treatment with a sulfating agent into the corresponding phthalocyanine compounds in which Y denotes the β -sulfatoethyl group.

5. The use of the water-soluble phthalocyanine compound mentioned in claim 1, as a dyestuff.

6. Wool, silk, leather or fiber materials made of linear polyamides or materials containing hydroxyl groups, which have been dyed or printed with the phthalocyanine compound mentioned in claim 1.